# EUROPEAN PATENT APPLICATION

(11) **EP 4 136 983 A1**
(43) Date of publication of application: **22.02.2023**
(21) Application number: 20930740.4
(22) Date of filing: 16.04.2020
(51) Int. Cl.: A23L 19/00, A21D 2/18

(54) **FOOD PROPERTY IMPROVER CONTAINING DEXTRAN-COATED COMPOSITION**

(71) Applicant: Mitsubishi Corporation Life Sciences Limited, Tokyo 100-0006 (JP)
(72) Inventor: YAMADA Akifumi, Tokyo 100-0006 (JP); NAMBA Madoka, Tokyo 100-0006 (JP); NARUSHIMA Noriko, Tokyo 100-0006 (JP); FUJIMOTO Akihito, Tokyo 100-0006 (JP); KURIHARA Hideyuki, Sapporo-shi Hokkaido 060-0808 (JP)
(74) Representative: Müller-Boré & Partner Patentanwälte PartG mbB
(86) International application number: PCT/JP2020/016710
(87) International publication number: WO 2021/210126

(57) **Abstract**

According to the present invention, a food physical property-improver containing a dextran coated material exhibits a food physical property-improving effect equivalent to that of dextran with a molecular weight of 150,000 Da or more. In addition, since the outer peripheral portion of the dextran coated material is coated with dextran with a molecular weight of 7,000 Da or less, high molecular dextran, wheat flour and the like in the food physical property-improver are not precipitated and are not separated even when the product is stored in a stationary state for a long time, so that the material can be used in a uniform state even if it is not inverted and mixed before use. In addition, the food physical property-improver in the present invention contains dextran with a maximum molecular weight of 10⁵ Da, but the composition exhibits a physical property-improving effect equivalent to that when dextran with a molecular weight of 10⁶ Da has been added.

## Description

### Technical Field

The present invention relates to a composition in which food particles are coated with dextran, and a food physical property-improver containing the composition.

### Background Art

Dextran is a type of exopolysaccharide produced by lactic acid bacteria, and is a homopolysaccharide in which glucose is linked by α-1,6 bonds. Refined products are used in the fields of medicine, industrial products, cosmetics, foods and the like depending on differences in purity and molecular weight. In the food field, they are classified as thickening polysaccharides of existing food additives in the Food Sanitation Act. According to the Food Sanitation Act, lactic acid bacteria that can be used for production of dextran are limited to Leuconostoc mesenteroides and Streptococcus equinus. However, lactic acid bacteria that produce dextran (hereinafter, abbreviated as dextran-producing bacteria) are isolated not only from the above-mentioned bacterial species but also from various fermented foods, and Weissella confusa, Leuconostoc lactis and the like are known (Non Patent Literature 1). The molecular structure of dextran includes not only a linear structure composed of α-1,6 bonds but also branches such as α-1,2, α-1,3, and α-1,4 bonds, and there are various patterns, but all of them are bonded to water with -OH groups directed to the outside of the molecule and exhibit water retainability. Therefore, in the food industry, it is reported that the larger the molecular weight, the higher the water retention effect when added to food (Non Patent Literature 2 and Patent Literature 1). Regarding the molecular weight of dextran, there is no clear distinction or definition between high molecule and low molecule, but when many prior literatures are compared, there is a tendency that dextran is treated as a high molecule from a molecular weight of 10⁵ Da or more and treated as a low molecule from 10⁴ Da or less.

For example, Patent Literature 1 discloses that high molecular dextran is more effective than low molecular dextran for softness, moistness, and aging inhibition of bread. Similarly, Non Patent Literature 2 also discloses that a fermented dough containing high molecular dextran with a molecular weight of 2,000 kDa (2 million Da) exhibits the same addition effect as that of Patent Literature 1. On the other hand, Patent Literature 2 also points out that while high molecular dextran with a molecular weight of more than 200,000 Da improves softness when added to bread, the high molecular dextran strengthens a sticky texture to deteriorate crispness, which adversely affects physical properties of bread dough.

As mentioned in Patent Literature 2, it is required that the fermented dough further improves the softness, moistness, and melt-in-the-mouth of bread, but does not affect breadmaking properties. Therefore, even in the case of a product containing dextran as a main component, improvement in crispness of bread and improvement of workability of bread dough remain as problems. In addition, in many cases, the above-described fermented dough is liquid or semi-fluid in property, and solid-liquid separation occurs when the fermented dough is stored in a stationary state. This is because the dextran with a large molecular weight and a substrate such as wheat flour contained in the fermented dough precipitate, and a product such as the fermented dough once separated is hard to be completely mixed even if it is inverted and mixed before use. If the fermented dough subjected to solid-liquid separation is used without being sufficiently mixed, a lot difference may occur in the bread of the final product.

### Citation List

### Patent Literature

Patent Literature 1: JP 2119871 B2
Patent Literature 2: JP 6282875 B2

### Non Patent Literature

Non Patent Literature 1: Pepe, O., Ventorino, V., Cavella, S., Fagnano, M., Brugno, R., :Prebiotic content of bread prepared with flour from immature wheat grain and selected dextran- producing lactic acid bacteria. Applied Environmental Microbiology.,2013 Jun;79(12):3779-3785.
Non Patent Literature 2: Zhang, Y., Guo, L., Xu, D., Li, D., Yang, N., Chen, F., Jin, Z., Xu, :Effects of dextran with different molecular weights on the quality of wheat sourdough breads., Food Chemistry., 2018 Aug 1;256:373-379
Non Patent Literature 3: Michio Kozaki, Tai Uchimura, and Sanae Okada, "Experimental Manual of Lactic Acid Bacteria - From Separation to Identification -", Asakura Publishing Co., Ltd., 1992
Non Patent Literature 4: Atsuya Harada, Asahi Misaki, "Sougou Tatourui Kagaku Ge (General Science of Polysaccharides)", Kodansha Ltd., 1974

### Summary of Invention

### Technical Problem

A problem to be solved by the present invention is to provide a food physical property-improver which does not affect breadmaking properties, has a physical property-improving effect equal to or higher than that of high molecular dextran, and has uniformity without solid-liquid separation even when stored for a long period of time.

### Solution to Problem

As a result of intensive studies to solve the above problem, the present inventors have found that the above problem can be solved by using food particles whose outer peripheral portion is coated with dextran with a molecular weight of 7,000 Da or less and dextran with a molecular weight of 150,000 Da or more in combination.

That is, according to the present invention, *
(1) a food particle in which a part or whole of an outer peripheral portion is coated with dextran with a molecular weight of 7,000 Da or less.
(2) A food physical property-improver containing dextran with a molecular weight of 150,000 Da or more and the food particle according to (1).
(3) The food physical property-improver according to (2), in which the food particle is one or more of grain flour, seed flour, and vegetable flour.
(4) A dough composition for heat-processed food containing the food physical property-improver according to (2) or (3).
(5) A heat-processed food obtained by baking the composition according to (4).
(6) A method for improving physical properties of a heat-processed food, including adding 0.5 to 20 wt% of the food physical property-improver according to (2) or (3).

### Advantageous Effects of Invention

When dextran in the food physical property-improver of the present invention is bonded to water, water retainability of food can be enhanced to improve physical properties. For example, in the case of bread which is a heat-processed food, it is possible to improve physical properties such as improvement in softness, moistness, and melt-in-the-mouth of bread and inhibition of aging of starch, by adding dextran having high water retainability. In addition, the food physical property-improver is less likely to cause precipitation of high molecular dextran and food particles even when stored in a stationary state for a long time, that is, is less likely to cause solid-liquid separation, so that the food physical property-improver can be used in a uniform state even if it is not inverted and mixed before use.

### Brief Description of Drawings

Fig. 1 shows a molecular weight distribution in a low molecular weight region of dextran contained in Section 1.
Fig. 2 shows a molecular weight distribution in a low molecular weight region of dextran contained in Comparative Section 1.
Fig. 3 shows a molecular weight distribution in a high molecular weight region of dextran contained in Section 1.
Fig. 4 shows a molecular weight distribution in a high molecular weight region of dextran contained in Comparative Section 1.
Fig. 5 shows starch granules contained in Section 1 by micro-Raman spectrometer.
Fig. 6 shows low-molecular dextran that coats starch granules contained in Section 1 by micro-Raman spectrometer.
Fig. 7 shows the state after centrifugation of Section 1 and Comparative Section 1.
Fig. 8 shows results of measuring the aging degree of sponge dough bread.

### Description of Embodiments

Hereinafter, the present invention will be described in detail.

The food physical property-improver in the present invention is a composition containing food particles in which a part or whole of an outer peripheral portion is coated with dextran with a molecular weight of 7,000 Da or less and dextran with a molecular weight of 150,000 Da or more. When the molecular weight of dextran contained in the food physical property-improver is more than 7,000 Da and less than 150,000 Da, there is a high possibility that the physical property-improving effect when added to food is reduced or solid-liquid separation occurs when the agent is stored, and therefore the molecular weight is preferably distributed to 7,000 Da or less and 150,000 Da or more.

The dextran used in the present invention is not different from known dextran except that the molecular weight is within the above numerical range. Specifically, the dextran may be a polysaccharide having glucose as a constituent sugar, a main chain by α-1,6 bonds, and a branched structure partially having α-1,2 bonds, α-1,3 bonds, and α-1,4 bonds.

In the present invention, the molecular weight of dextran is represented by an average molecular weight, and a value calculated by a peak top molecular weight (Mp) is used.

The dextran used in the present invention may be derived from or prepared by any of commercially available purified dextran, dextran prepared by a fermentation method, an enzyme method or an acid hydrolysis method, or the like. Examples of dextran prepared by a fermentation method include dextran produced from sucrose as a precursor by dextran sucrase produced by lactic acid bacteria, dextran produced from a starch partial hydrolysate as a precursor by dextrin dextranase produced by gluconobacter bacteria, and the like.

When dextran is produced by lactic acid bacteria, the lactic acid bacteria (hereinafter, it is also referred to as dextran-producing lactic acid bacteria.) are desirably lactic acid bacteria that produce dextran from sucrose outside the bacterial cell, and examples thereof include the genus Streptococcus, the genus Leuconostoc, the genus Weissella, and the genus Lactobacillus. The dextran-producing lactic acid bacteria may be a commercially available lactic acid bacteria starter, may be obtained from a bacterial strain preservation institution and used, or may be isolated from various fermented foods and used. When the dextran-producing lactic acid bacteria are isolated from a fermented food product, screening is performed using a selective medium for lactic acid bacteria and a sucrose medium described in Non Patent Literature 3.

The food particle in which a part or whole of an outer peripheral portion is coated with dextran with a molecular weight of 7,000 Da or less in the present invention (hereinafter, it is also referred to as the dextran coated material of the present invention.) refers to a simple substance having a structure in which a part or whole of an outer peripheral portion of a core material is coated with dextran with a molecular weight of 7,000 Da or less using a granular structure contained in a food material as the core material or a plurality of the simple substances, or a content thereof.

The food material used as the core material is desirably one or more selected from grain flour, seed flour, vegetable flour, starch derived from these food materials, gluten, gliadin, and glutenin. When dextran is produced by dextran-producing lactic acid bacteria described later, the core material may be selected from food materials that can be assimilated as a fermentation substrate by the dextran-producing lactic acid bacteria.

As the grain flour used as the core material, an endosperm of a grain or a flour prepared by grinding the endosperm with germ or epidermis attached thereto can be used. Examples of the grain include wheat, rice (non-glutinous rice, glutinous rice), barley, rye, corn, foxtail millet, Japanese barnyard millet, and adlay, and as the grain flour, wheat flour (for example, hard flour, semi-strong flour, medium-strength flour, weak flour, whole grain flour, and the like), rice flour (top-grade rice flour made from non-glutinous rice, fine grade rice flour, glutinous rice flour, refined rice flour, brown rice flour, and the like), barley flour, rye flour (whole rye flour or peeled rye finely ground, medium ground, coarsely ground, and stone milled), corn flour, foxtail millet flour, Japanese barnyard millet flour, adlay flour and the like can be used.

In addition, as the seed flour used as the core material, it is possible to use a plant seed other than grains containing a starchy material, an endosperm of the plant seed, or a flour prepared by grinding the endosperm with germ or epidermis attached thereto. Examples of the plant seed include seeds of soybean and buckwheat, and examples of the endosperm of these seeds or the flour (seed flour) prepared by grinding the endosperm with germ or epidermis attached thereto include soybean flour, buckwheat flour, and the like.

Further, as the vegetable flour used as the core material, a vegetable containing a starchy material, or a flour obtained by powdering the vegetable can be used. Examples of the vegetable containing a starchy material include potatoes such as potato and sweet potato, and vegetables such as bracken. Examples of the vegetable flour obtained by powdering such vegetable (vegetable flour) include powdered potato, bracken powder, and the like.

Furthermore, examples of the starch to be used as the core material include the above-mentioned grains, plant seeds other than grains containing a starchy material, and those (starch) obtained by extracting only a starchy material from a plant body as those other than vegetables containing a starchy material. Examples of the starch include corn starch, green bean starch, potato starch, arrowroot starch, and the like.

The starch also includes processed starches (functional starches obtained by subjecting natural starch to physical and chemical treatments). Examples of the processed starch include acetylated adipic acid crosslinked starch, acetylated phosphorylated crosslinked starch, acetylated oxidized starch, sodium octenylsuccinate starch, acetic acid starch, oxidized starch, hydroxypropyl starch, hydroxypropyl phosphate crosslinked starch, phosphoric acid monoesterified phosphoric acid crosslinked starch, phosphorylated starch, phosphoric acid crosslinked starch, unmodified pregelatinized starch, modified pregelatinization, or the like, which is processed by using potato starch, corn starch, tapioca starch, wheat starch or the like as a raw material starch.

These starches may be used alone, or two or more kinds may be used in combination. The starch is preferably a starch derived from at least one selected from the group consisting of grain flour, seed flour, vegetable flour, and starch (including processed starch). The starch is more preferably a starch derived from at least one selected from the group consisting of grain flour, seed flour, and starch (including processed starch), further preferably a starch derived from at least one selected from the group consisting of grain flour and starch (including processed starch), and particularly preferably a starch derived from grain flour. The grain flour is preferably wheat flour, and the wheat flour can be used in combination with at least one selected from other starchy raw materials such as rice flour, rye flour, corn flour, potato starch, and processed starch.

In the present invention, examples of the method of coating a part or whole of an outer peripheral portion of food particles serving as the core material with dextran with a molecular weight of 7,000 Da or less include a preparation method by dispersing dextran with a molecular weight of 7,000 Da or less and food particles serving as the core material in a suitable aqueous medium such as water and stirring the dispersion. Specifically, using dextran with a molecular weight of 7,000 Da or less and food particles serving as the core material as raw materials, it can be adjusted by being subjected to a granulation method usually performed in the food field. Examples of the granulation method include a granulation method using a fluidized bed granulator, a granulation method using a stirring fluidized bed granulator equipped with a stirring blade in a fluidized bed granulator, a granulation method using a rolling fluidized bed granulator equipped with a rolling plate, a granulation method using a fluidized granulator such as a Worster fluidized bed coating machine, a granulation method using a stirring granulator that stirs a powder and adds a binder into the powder to form a granule, and a granulation method using a granulator that extrudes a powder together with a binder under high pressure. In the present invention, the phrase "a part of an outer peripheral portion of food particles is coated" refers to a state in which at least 30% or more, preferably 50% or more of the surface area of the food particle is coated with dextran.

As the dextran with a molecular weight of 7,000 Da or less to be used for coating of food particles, dextran with an average molecular weight larger than that of the dextran or a content thereof can be used by being subjected to a method capable of decomposing dextran, such as decomposition by dextranase or acid hydrolysis by hydrochloric acid.

The obtained dextran coated material of the present invention is mixed with dextran with a molecular weight of 150,000 Da or more to form a mixture, whereby it can be used for preparation of the food physical property-improver in the present invention.

In addition to the above, examples of the method for preparing the food physical property-improver of the present invention also include a method for directly preparing by adding a stirring operation during culturing of dextran-producing lactic acid bacteria or under the condition that low molecular dextran is produced from high molecular dextran by an enzyme decomposing dextran.

Hereinafter, a method for directly preparing the food physical property-improver of the present invention by a fermentation method using dextran-producing lactic acid bacteria will be exemplified.

When a dextran coated material and a food physical property-improver are prepared by a fermentation method, the following three raw materials are used. The first is wheat flour, potato starch, rice flour or gliadin which is a fermentation substrate and serves as a core material of a dextran coated material. The second is sucrose which is a precursor of dextran and serves as a primer for producing dextran. The third is a pre-culture solution of dextran-producing lactic acid bacteria. The raw materials other than the pre-culture solution of dextran-producing lactic acid bacteria are mixed with water in advance to prepare a medium for producing dextran. The amount of each raw material used is such that the proportion of wheat flour, potato starch, rice flour or gliadin in the final composition is 10 to 50 wt%, preferably 20 to 40 wt%, the proportion of sucrose is 5 to 30 wt%, preferably 10 to 25 wt%, and the proportion of water is 35 to 75 wt%, preferably 45 to 70 wt%, more preferably 25 to 35 wt%.

Separately, a pre-culture solution in which dextran-producing lactic acid bacteria are cultured under culture conditions suitable for the lactic acid bacteria is prepared, and added to the dextran production medium. The amount of the pre-culture solution to be added to the dextran production medium is usually 5 to 10 parts by weight with respect to 100 parts by weight of the dextran production medium although it depends on the amount of bacterial cells in the pre-culture solution.

After these raw materials are mixed in an appropriate container, the pH is adjusted to around 7 as necessary, and the mixture is cultured at 25 to 35°C for 24 to 48 hours. The culture may be static culture, but it is preferable to continuously or intermittently stir the medium at such a rotation speed that the food particles contained in the medium do not precipitate. This is for making it easy to coat food particles with dextran produced during culture in a state of a molecular weight of 7,000 Da or less. The molecular weight of dextran can be evaluated by qualitative analysis by gel filtration chromatography, and a micro-Raman spectrometer can be used to observe the coated state with dextran.

The dextran coated material or the food physical property-improver of the present invention may be used in any one of liquid, paste, dough, and powder form, and the properties thereof are not limited. When the dextran coated material or the food physical property-improver of the present invention is pulverized, a dry pulverization method can be appropriately selected according to the characteristics and properties thereof. For example, it can be pulverized by any method such as a spray drying method, a freeze drying method, or a drum drying method.

The method for adding the food physical property-improver of the present invention to food is not particularly limited. For example, the raw material may be added as a part of the raw material when food is produced, or may be added after being mixed with another raw material. The time of addition is not particularly limited, and it is preferable to add the raw materials before or during mixing from the viewpoint of easily producing food.

The food to which the food physical property-improver of the present invention is added is not particularly limited. Examples thereof include dough for heat-processed food such as bread and baked confectionery. The dough to which the food physical property-improver of the present invention is added can be baked in accordance with normal baking conditions of each heat-processed food to obtain a baked food product. The obtained heat-processed food is excellent in smoothness, softness, and melt-in-the-mouth texture. Furthermore, by appropriately changing a food material serving as a core material, the food material may be added to noodles such as Chinese noodles and Japanese udon noodles, rice or the like, and each food can be processed in accordance with normal heating conditions.

Therefore, the food physical property-improver of the present invention can be suitably used as an improver for modifying texture of food, and the use of the food physical property-improver of the present invention in food is exemplified as a method for improving physical properties of food.

The food physical property-improver of the present invention can be used in combination with the raw materials described below as long as the effect of adding the improver is not impaired. As the food additive or food material that can be used in combination with the improver, for example, monoglycerin fatty acid ester, stearoyl calcium lactate, sodium stearoyl lactate, wheat gluten, corn starch, modified dextrin, xylanase, wheat starch, dextrin, processed fat and oil, palm hardened oil, sucrose fatty acid ester, sorbitan fatty acid ester, diacetyl tartaric acid monoglyceride, propylene glycol, guar gum, tricalcium phosphate, α-amylase, β-amylase, glucose oxidase, hemicellulase, protease, potato starch, corn starch, salt, vitamin E, L-ascorbic acid, vitamin C, carotene pigment, lecithin, enzymatically decomposed lecithin, sodium caseinate, D-sorbitol, yeast extract, cystine, dietary fiber, vinegar, isomerized liquid sugar, lipase, phospholipase, or the like may be used.

### Examples

Hereinafter, the present invention will be specifically described using Examples and Comparative Examples.

The present invention is not limited thereto.

### [Example 1]

### Preparation of food physical property-improver

### [Object]

A food physical property-improver used in the present invention was prepared.

### [Method]

Food particles serving as a core material of a dextran coated material were used as starch contained in wheat flour, and a food physical property-improver was prepared by a fermentation method using dextran-producing bacteria.

Since wheat flour has different viscosity depending on quality and a standard value, the amount of wheat flour was set so that the viscosity before fermentation was 100 cp or less with a B-type viscometer. An equal amount of sucrose to wheat flour was weighed in a stainless steel beaker and dissolved in water 2.6 times the amount of wheat flour. Wheat flour was mixed with the aqueous sucrose solution, and a separately prepared Weissella confusa ATCC14434 (hereinafter, abbreviated as ATCC14434) culture solution was added thereto. The mixed wheat flour dough was adjusted to a pH of 7.0 with sodium hydrogen carbonate, and stirred and cultured at 30°C for 24 to 48 hours. The fermentation time was set until the pH reached 4.0 or less, and the stirring speed was set to a rotation speed at which wheat flour did not precipitate.

### [Example 2]

### Measurement of molecular weight distribution

### [Object]

The food physical property-improver in the present invention was designated as Section 1, and the molecular weight distribution of dextran contained in the improver was examined. In Comparative Section 1, the molecular weight distribution of the wheat flour fermentation liquid was examined, which had the same physical property-improving effect when added to bread, but caused precipitation of high molecular dextran and food particles and caused solid-liquid separation when stored for a long period of time.

### [Method]

Dextran contained in an analysis sample was extracted and subjected to gel filtration chromatography.

### (Extraction of dextran)

The analysis sample was shaken and mixed before weighing to be uniform. 2 g of each of Section 1 and Comparative Section 1 was weighed in a 50 mL centrifuge tube, and diluted 10 times by adding 8 mL of distilled water, then the mixture was centrifuged (10°C, 2300 r.p.m., 10 min). Ethanol was added to the obtained centrifugal supernatant so as to have a final concentration of 85% or more, and the mixture was further centrifuged (15°C, 3000 r.p.m., 30 min) to obtain centrifugal precipitate. Centrifugal precipitate was dried at room temperature for 2 days to remove ethanol, and further vacuum-dried in a vacuum desiccator for 5 hours. Centrifugal precipitate after drying was used as a crude polysaccharide.

### (Purification of dextran)

Each of the obtained crude polysaccharides was subjected to anion exchange chromatography for purification. The analysis conditions are shown below.

Carrier ECTEOLA-cellulose (Cl⁻ type, Wako Pure Chemical Industries, Ltd.)
Column size 2.6 × 30 cm
Flow rate 0.7 ml/min
Elution solvent Water
Fraction 7.0 ml/fraction
Detection Phenol-sulfuric acid method
Total number 80 columns
(Phenol-sulfuric acid method)

After 0.5 mL of a 5% phenol aqueous solution was added to 0.5 ml of a sample solution, 2.5 mL of concentrated sulfuric acid was added dropwise directly to the liquid surface. This was allowed to stand at room temperature for 20 minutes, and then the absorption value was measured at 490 nm.

### (Molecular weight analysis of dextran by gel filtration chromatography for low molecules)

The gel chromatography was performed according to the following analysis conditions.
Column XK 26/100 (GE Healthcare)
Carrier Sephadex G-100 (GE Healthcare)
Size 2.6 × 90 cm
Flow rate 0.50 ml/min
Solvent 1 M NaCl
Injection amount 1.0 ml
Fraction 7.0 ml/fraction
Detection Phenol-sulfuric acid method

In addition, dextran with molecular weights of 25,000 (Funakoshi Co., Ltd.), 40,000 (Funakoshi Co., Ltd.), and 75,000 (CarboMer, Inc.) and Blue Dextran were used as molecular weight standard curve materials when preparing a molecular weight calibration curve.

### (Molecular weight analysis of dextran by gel filtration chromatography for high molecules)

The gel chromatography was performed according to the following analysis conditions.
Column XK 26/100 (GE Healthcare)
Carrier Sephacryl S-400 HR (GE Healthcare)
Size 2.6 × 80 cm
Flow rate 0.60 ml/min
Solvent 1 M NaCl
Injection amount 1.0 ml
Fraction 7.0 ml/fraction
Detection Phenol-sulfuric acid method

In addition, dextran with a molecular weight of 150 kDa (Funakoshi Co., Ltd.), 75 kDa (CarboMer, Inc.), and 10 kDa (Funakoshi Co., Ltd.) was used as molecular weight standard curve substances when preparing a molecular weight calibration curve.

### [Results]

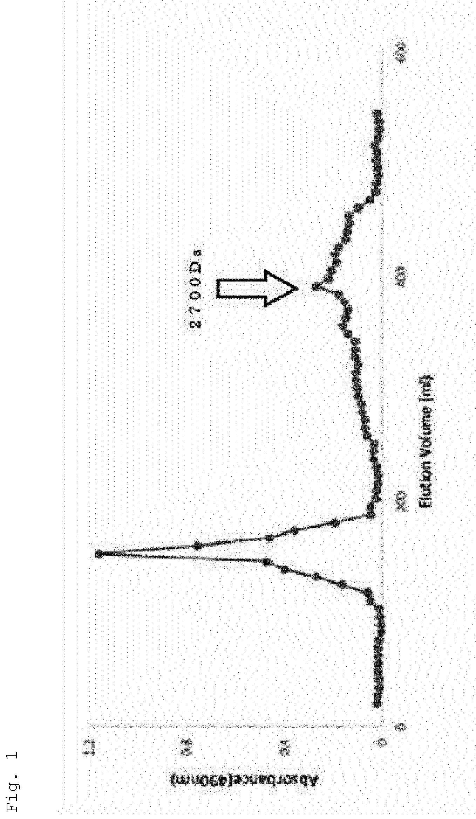

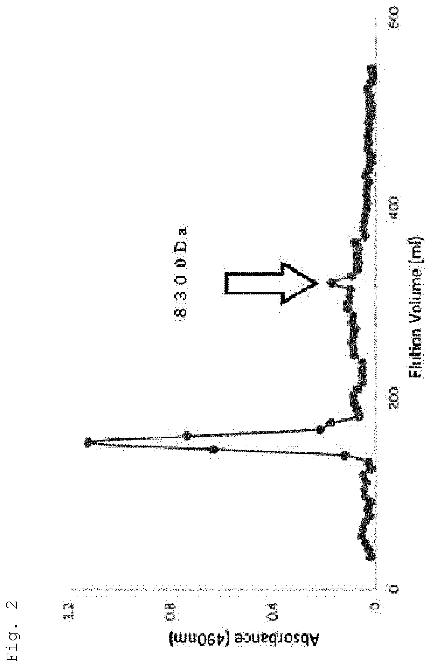

The results of molecular weight analysis of dextran by gel filtration chromatography for low molecules are shown in Figs. 1 and 2. Fig. 1 shows a chromatograph of Section 1, and Fig. 2 shows a result of Comparative Section 1. Dextran was detected in a fraction with a retention volume of 200 to 500 mL. From the peak top, the approximate molecular weight of dextran detected from both test sections was estimated. The molecular weight was about 2,700 Da in Section 1, about 8,300 Da in Comparative Section 1, and a peak of a large molecular weight was confirmed in a low molecular region in Comparative Section 1. When peak areas of the low molecular regions were compared, it was shown that the peak area of Section 1 was clearly larger than that of Comparative Section 1, and Section 1 contained a large amount of dextran with a low molecular weight.

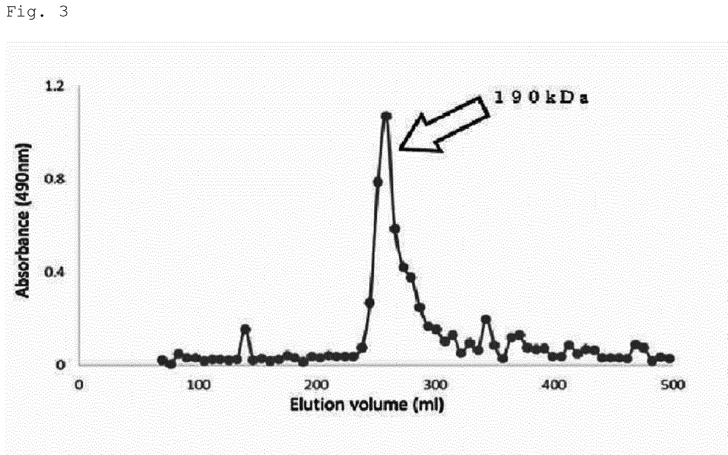

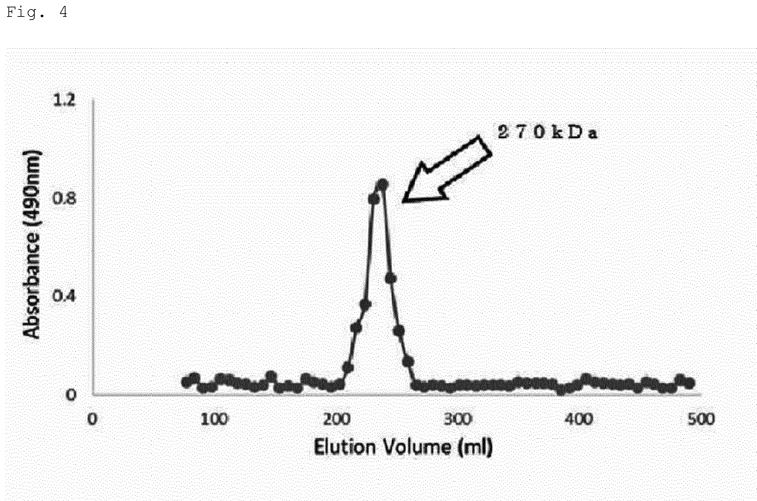

The results of molecular weight analysis of dextran by gel filtration chromatography for high molecules are shown in Figs. 3 and 4. Fig. 3 shows a chromatograph of Section 1, and Fig. 4 shows a result of Comparative Section 1. In Section 1, there was a slight peak in void volume, suggesting that dextran with a larger molecular weight was present. The peak in the retention volume was larger in Comparative Section 1 than in Section 1, and was about 270 kDa and about 190 kDa, respectively.

From the above, it was shown that dextran molecules were distributed in a region around a molecular weight of 2,700 Da and a region around a molecular weight of 190 kDa in Section 1, and dextran with a lower molecular weight was contained in a larger amount than in Comparative Section 1. On the other hand, Comparative Section 1 contained a large amount of molecular weight of 270 kDa, and little dextran with a low molecular weight was observed.

From the above results, as shown in Figs. 1 and 2, the food physical property-improver in the present invention contains low molecular dextran with a molecular weight of 7,000 Da or less and a polymer with a molecular weight of 10⁶ Da.

### [Example 3]

### Structure observation of dextran coated material

### [Object]

In the present invention, the aspect of a dextran coated material in which food particles were coated with low molecular dextran was examined.

Nondestructive analyzer: the crystal structures of starch granules and dextran in the food physical property-improver of Section 1 were observed using a micro-Raman spectrometer (Renishaw plc.).

### [Method]

| | | |
|---|---|---|
| Device: | inVia Reflex | (Renishaw plc.) |

The measurement conditions were as follows.

| | |
|---|---|
| Laser wavelength: | 785 nm |
| Measurement | magnification: 50× |
| Measurement range: | 100 × 200 um |
| Measurement interval: | Step 1.2 um |
| Data processing: | Principal component analysis (PCA) |

### [Results]

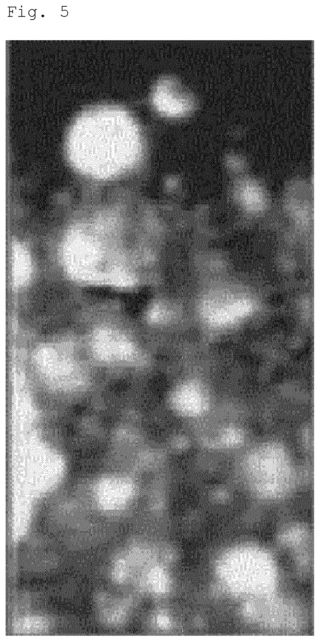

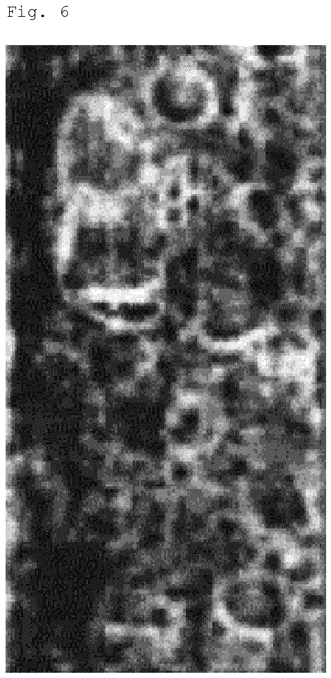

The micro-Raman spectrometer can depict a cross-section of a micro-object with a size of several um, and different substances can be indicated in different colors by different spectra. Raman images of starch and dextran contained in Section 1 are shown in Figs. 5 and 6. Fig. 5 depicts starch granules contained in the food physical property-improver of Section 1. It was shown that starch granules were interspersed in white to light grey filled portions. Fig. 6 depicts dextran contained in Section 1. The white filled portions were dextran, and when superimposed on the starch granules of Fig. 5, it was shown that dextran was present so as to coat the starch granules. Furthermore, since the lactic acid bacteria used in the present invention have a characteristic of generating high molecular dextran outside the bacterial cell, dextran should be present so as to fill the gaps between the starch granules, but dextran on the surface of the starch granules is captured in a spectrum different from the portion filling the gaps. From the above, it was shown that there was a possibility that starch granules were not buried in high molecular weight dextran, but the outer peripheral portion of the starch granules were coated with low molecular dextran.

### [Example 4]

### Study of conditions for solid-liquid separation

### [Object]

In Section 1, solid-liquid separation does not occur even after storage for a long period of time, but in Comparative Section 1, solid-liquid separation occurs in a short period of time. The conditions under which solid-liquid separation occurred were expressed in terms of centrifugal force and compared.

### [Method]

In a 15 mL centrifuge tube, 3 g of a sample was weighed, and centrifuged at 3000 G for 10 minutes, and the properties were compared.

### [Results]

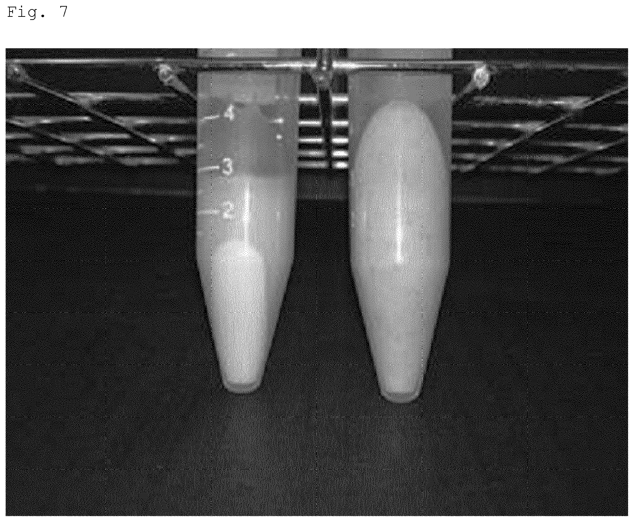

The properties of Section 1 and Comparative Section 1 after centrifugation were shown in Fig. 7. The left side shows an aspect of Comparative Section 1, and the right side shows an aspect of Section 1. As shown in Fig. 7, by centrifugation at 3000 G for 10 minutes, Comparative Section 1 was divided into a layer of wheat starch and a layer in which dextran and water were mixed which had a slightly high viscosity at the lower part, and solid-liquid separation was performed in the order of wheat starch, dextran, water, and an aqueous solvent from the lower part to the upper part of the centrifuge tube. Section 1 did not appear to be separated and remained homogeneous.

### [Example 5]

### Effects as food physical property-improver

### [Object]

The effect of adding the food physical property-improver obtained in Example 1 was evaluated with sponge dough bread. As the evaluation items, breadmaking evaluation, sensory evaluation, and aging degree measurement were performed.

### [Method]

### (Preparation of test sample)

For a comparative section with respect to Section 1, 7 g of a dextran reagent was added to 93 g of a wheat flour fermentation liquid containing no dextran, and the mixture was homogenized for a certain period of time (4°C, several hours to half a day) by cold storage. Regarding the dextran concentration in the comparative section, the addition amount was determined from the information of Non Patent Literature 4, since the amount of dextran contained in Section 1 was estimated to be 7% when the production efficiency of dextran was taken as a relative sugar yield of 38%. As the dextran reagent, three kinds of reagents with different molecular weights shown in Table 1 were used.

**[Table 1]**

| molecular weight(kDa) | product name | maker |
|---|---|---|
| 60 | Dextran60,000 | Fujifilm Wako Pure Chemical Corporation |
| 200-300 | DEXTRAN CLINICAL GRADE | MP Biomedicals,LLC |
| 1500-2800 | Dextran average mol wt~2,000,000 | Sigma Aldrich |

### (Preparation of sponge dough bread)

The raw materials and processes of the sponge dough bread are shown in Tables 2 and 3, respectively.

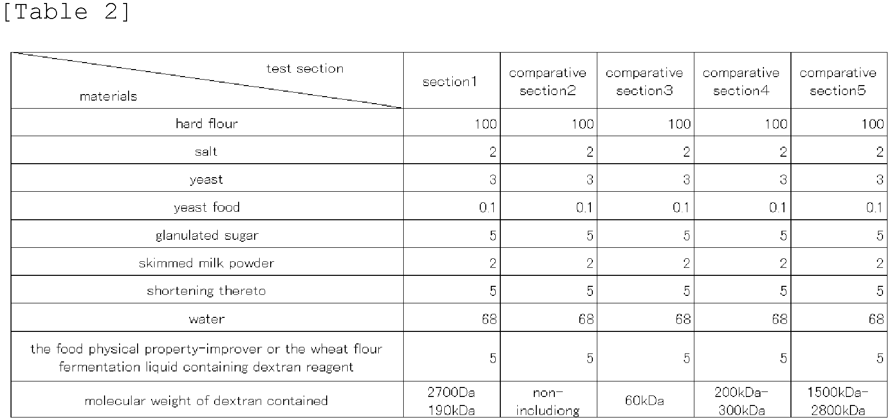

**[Table 3]**

| process | | |
|---|---|---|
| sponge dough | mixing | low speed3min→middle low speed2min |
| | temperature at the end of mixing | 24°C |
| | fermentation | 28°C, 4hour |
| 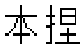 | mixing | low speed3min→middle low speed2min→middle high speed2min, oil and fat addition, low speed2min→middle low speed3min→middle high speed2min |
| | temperature at the end of mixing | 28°C |
| | first fermentation | 28°C, 20min |
| | division | 220g × 4 |
| | bench time | 20min |
| | molding | Pullman |
| | secondury fermentation | 38°C, 85%RH |
| | baking | up210°C, down200°C, 30min |

The proportion of sponge dough in the sponge dough method was set to 70% sponge dough. The sponge dough was prepared by weighing strong flour, yeast food, yeast and water, kneading them with a vertical mixer, and fermenting the mixture in an incubator at 28°C for 4 hours. The present kneaded dough was prepared by kneading the fermented sponge dough, granulated sugar, salt, skimmed milk powder and water with a vertical mixer, adding shortening thereto, and re-kneading them. The wheat flour fermentation liquid containing the food physical property-improver of the present invention and dextran was mixed at the same time as the raw materials (excluding shortening) used for the present kneaded dough. The mixed dough was divided into 220 g portions after a floor time of 20 minutes, and the dough was rested at a bench time of 20 minutes, then molded with a molder, and filled in a 1.5 loaf bread mold. The dough filled in the mold was subjected to secondary fermentation in a temperature controlled chamber maintained at a temperature of 38°C and a humidity of 85% for about 50 minutes, and then baked in a reel oven at 200°C for 30 minutes. The baked bread was cooled at room temperature on a rack shelf and bagged 90 minutes later.

### (Sensory evaluation)

Sensory evaluation was performed by a 7-point evaluation method on a sample one day after baking (hereinafter, referred to as D1). The sponge dough bread of Comparative Section 2 was rated as 4 points of the criteria for the evaluation items described below, and Section 1 and Comparative Section 3 to Comparative Section 5 were evaluated and compared. Sensory evaluation items were "hardness", "moistness", and "melt-in-the-mouth", and sensory evaluation was performed by eight trained panelists. These sensory evaluation items were scored according to the criteria shown in Table 4.

**[Table 4]**

| sensory evaluation | valuation standard |
|---|---|
| hardness | hard : 1 < 7 : soft |
| moistness | dry : 1 < 7 : moist |
| melt-in-the-mouth | bad . 1 < 7 : good |

### (Measurement of aging degree)

The aging degree of bread was evaluated by measuring the softness of crumbs in D1 and D3. D1 bread bagged and stored at room temperature was sliced to a thickness of 1.8 cm with a slicer (HARD 70V single slicer, Hakura Seiki Co., Ltd., Tokyo), and compressive stress (analysis conditions: 1.8 cm 30% compressive stress 10 times ver. xmez) of the crumb was measured with a texture analyzer (measuring instrument: EZ Test, measurement/analysis software: TRAPEZIUM, both manufactured by Shimadzu Corporation). Similarly, D3 bread was also measured, and aging of D1 to D3 was examined.

### [Results]

The sensory evaluation results in D1 of the sponge dough bread are shown in Table 5. When the wheat flour fermentation liquid containing no dextran was compared with Comparative Section 2, the addition effect was high for the softness and moistness of Section 1 and Comparative Section 5. In Section 1, Comparative Section 3 and Comparative Section 4, the addition effect by melt-in-the-mouth was high.

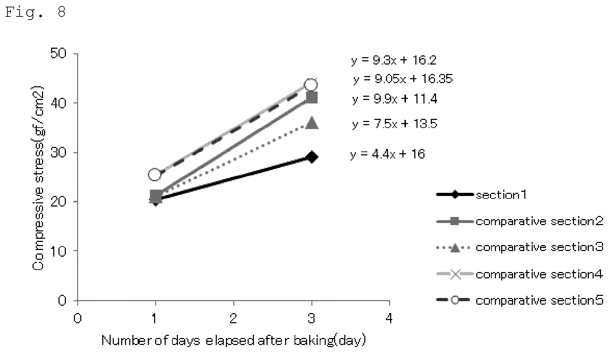

The results of the aging degree measurement are shown in Fig. 8. The aging degree of D1 to D3 indicates that the aging was suppressed as the inclination of the graph was larger, and the aging was suppressed as the inclination was smaller. When the test sections to be compared have a difference of ± 0.2 or more in inclination, it is considered that there is a difference in the aging inhibition effect. Since the inclination of Section 1 was smaller than those of the other test sections, it was shown that the aging inhibition effect was high.

From the above, it was shown in Section 1 that an effect of improving texture one day after baking was high, the softness and moistness were improved, and the melt-in-the-mouth was slightly improved. In addition, it was shown that this section had a high effect of suppressing aging from the first day to the third day after baking.

**[Table 5]**

| | softness | moistness | melt-in-the-mouth |
|---|---|---|---|
| section1 | 5.3 | 5.4 | 4.8 |
| comparative section2 | 4.0 | 4.0 | 4.0 |
| comparative sectionS | 4.1 | 4.0 | 4.6 |
| comparative section4 | 4.4 | 4.9 | 4.6 |
| comparative sectionS | 5.2 | 4.6 | 4.4 |

### Industrial Applicability

As described above, the food physical property-improver in the present invention includes not only dextran with a molecular weight of 150,000 Da or more (high molecular dextran) but also dextran with a molecular weight of 7,000 Da or less (low molecular dextran), and the low molecular dextran forms a dextran coated material that coats food particles contained in the agent. The dextran coated material suppresses solid-liquid separation occurring during still storage, which has not been solved so far, and exhibits a physical property-improving effect without a lot difference when added to various foods. In addition, the food physical property-improver in the present invention contains dextran with a maximum molecular weight of 10⁵ Da, but the composition exhibits a physical property-improving effect equivalent to that when dextran with a molecular weight of 10⁶ Da has been added. In addition, potato starch, rice flour, gliadin and the like have also been studied as food particles serving as a core material, and it has been confirmed that a food physical property-improver equivalent to wheat flour can be obtained. As a result, the present invention can be applied not only to bread but also to gluten-free confectionery, breadmaking, rice and the like, and it is possible to suppress deterioration in quality caused by aging of starch. Furthermore, it is considered that not only the aging of starch but also food in which a water retention effect is adjusted by a thickening polysaccharide can be provided as a material of a replacement candidate.

## Claims

1. A food particle in which a part or whole of an outer peripheral portion is coated with dextran with a molecular weight of 7,000 Da or less.

2. A food physical property-improver comprising dextran with a molecular weight of 150,000 Da or more and the food particle according to claim 1.

3. The food physical property-improver according to claim 2, wherein the food particle is one or more of grain flour, seed flour, and vegetable flour.

4. A dough composition for heat-processed food comprising the food physical property-improver according to claim 2 or 3.

5. A heat-processed food obtained by baking the composition according to claim 4.

6. A method for improving physical properties of a baked food, comprising adding 0.5 to 20 wt% of the food physical property-improver according to claim 2 or 3.
